# EUROPÄISCHE PATENTSCHRIFT

(11) **EP 1 652 614 B1**
(45) Veröffentlichungstag und Bekanntmachung des Hinweises auf die Patenterteilung: **23.09.2009**
(21) Anmeldenummer: 04025860.0
(22) Anmeldetag: 30.10.2004
(51) Int. Cl.: B23K 26/14, B23K 26/42, B25J 19/06, B23K 37/02, B23K 26/10

(54) **Halterung für einen Bearbeitungskopf an einer Laserbearbeitungsmaschine mit mehreren mit einer Einstellung der auslösenden Kollisionskraft vorgesehenden Kollisionsschutzelementen**
Holding tool for a processing head in a laser processing machine with several anti-colliding elements having means for adjusting the loosening load
Outil de maintien pour une tête de travail dans une machine laser avec plusieurs éléments anti-collision ayant des moyens pour ajuster l'effort de relâchement

(43) Veröffentlichungstag der Anmeldung: 03.05.2006
(73) Patentinhaber: TRUMPF Werkzeugmaschinen GmbH + Co. KG, 71254 Ditzingen (DE)
(72) Erfinder: Weick, Jürgen-Michael, 71679 Asperg (DE); Lambert, Martin, 71404 Korb (DE)
(74) Vertreter: Kohler Schmid Möbus

(56) Entgegenhaltungen:
- EP-A- 0 421 117
- DE-A1- 4 326 254
- GB-A- 2 071 609
- US-A- 4 673 329
- US-A- 4 698 480
- PATENT ABSTRACTS OF JAPAN Bd. 2000, Nr. 12, 3. Januar 2001 (2001-01-03) -& JP 2000 237874 A (AMADA CO LTD), 5. September 2000 (2000-09-05)
- PATENT ABSTRACTS OF JAPAN Bd. 017, Nr. 212 (M-1402), 26. April 1993 (1993-04-26) -& JP 04 351273 A (AMADA METRECS CO LTD), 7. Dezember 1992 (1992-12-07)

## Beschreibung

Die Erfindung betrifft eine Halterung eines Bearbeitungskopfs an einer Laserbearbeitungsmaschine mit einer Kollisionsschutzeinrichtung zum Lösen der Halterung bei einer Kollision des Bearbeitungskopfs gemäß dem Oberbegriff des Anspruchs 1 (siehe, z.B., EP 0 421 117).

Eine Kollisionsschutzeinrichtung eines Laserbearbeitungskopfs einer Laserbearbeitungsmaschine, umfassend eine lösbare Kupplung des Laserbearbeitungskopfs an einen Träger, ist beispielsweise durch die DE 197 01 516 C1 bekannt geworden.

Eine Kollision des Laserbearbeitungskopfs mit dem Werkstück oder einer Vorrichtung darf zu keinen Schäden an der Maschine oder auch dem Werkstück führen. Eine Abweichung des Laserbearbeitungskopfs von seiner Solllage nach einer Kollision muß präzise erkannt werden. Das Wechseln des Bearbeitungskopfs soll komfortabel an derselben Schnittstelle möglich sein.

Die bekannte Schnittstelle hat nur die Funktion einer mechanischen Befestigung des Laserschneidkopfs, der Übergabe von Schneidgasen und umfasst einen eingeschränktem Kollisionsschutz.

Der Anmelder hat sich die Aufgabe gestellt, eine Halterung zu schaffen, welche eine Aufnahme unterschiedlichster Bearbeitungsköpfe oder Werkzeuge ermöglicht.

Diese Aufgabe wird durch eine Halterung eines Bearbeitungskopfs an einer Laserbearbeitungsmaschine gemäß dem Anspruch 1. Je nach Einsatz des Bearbeitungskopfs oder Werkzeugs kann die Kollisionskraft geändert, und der Kollisionsschutz erhöht, eine Lockerung der Halterung ausgeführt bzw. der Kollisionsschutz vermindert und eine Versteifung der Halterung ausgeführt werden. Eine Laserbearbeitung erfolgt kraftlos, während bei einer mechanischen Bearbeitung wie dem Bohren oder dem Fräsen auf das Werkstück eine Kraft auf das Werkstück ausgeübt wird. Daher sollte ein Kollisionsschutz beim Laserbearbeiten leichter auslösen als einer beim mechanischen Bearbeiten. Diese Wahl des Kollisionsschutzes kann mithilfe der Erfindung ermöglicht werden.

Die neue Schnittstelle ermöglicht einen automatischen Kopfwechsel und übergibt neben den Arbeitsmedien weitere Signale und auch Hilfsenergie. Damit wird ein universeller Werkzeugeinsatz in einer Lasermaschine möglich.

Die Kollisionsschutzelemente können unterschiedlich ausgestaltet sein und beispielsweise mechanische Federn, Magnete oder auch Gasdruckfedern umfassen. Diese Mittel lassen sich auch kombinieren, um einfache und zu zugleich effektive Kollisionsschutzelemente zu bauen. Als Anlagemittel der Kollisionsschutzelemente an entsprechenden Gegenstücken des Bearbeitungskopfes kommen Kugel, Rollen oder Walzen usw. in Betracht, damit das Lösen der Verbindung bei einer Kollision leicht möglich ist.

Ein Ausführungsbeispiel der Erfindung ist in der Zeichnung schematisch dargestellt und wird nachfolgend mit Bezug zur Figur der Zeichnung näher erläutert. Es zeigt im Einzelnen:
- **Fig. 1**: eine perspektivische Darstellung einer Laserbearbeitungsanlage;
- **Fig. 2a**: eine Seitenansicht eines Laserschneidkopfs der Laserbearbeitungsanlage;
- **Fig. 2b**: eine perspektivische Darstellung des Laserschneidkopfs der Laserbearbeitungsanlage;
- **Fig. 3**: eine perspektivische Darstellung der Halterung des Laserschneidkopfs an der Laserbearbeitungsanlage;
- **Fig. 4a**: eine Schnittdarstellung einer ersten Kollisionsschutzelements der Halterung;
- **Fig. 4b**: eine Schnittdarstellung einer zweiten Kollisionsschutzelements der Halterung.

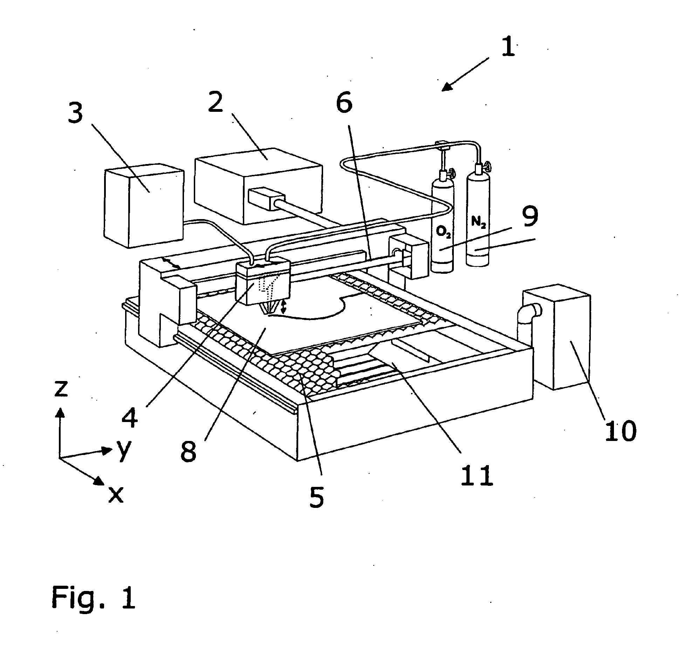

Aus der **Fig. 1** ist der prinzipielle Aufbau einer Laserbearbeitungsanlage **1** zum Laserschneiden mit einem CO₂-Laser **2,** einer Steuereinrichtung **3,** einem Laserbearbeitungskopf **4** und einer Werkstückauflage **5** ersichtlich. Ein erzeugter Laserstrahl **6** wird mithilfe von Umlenkspiegeln zum Laserbearbeitungskopf 4 geführt und auf ein Werkstück **8** gerichtet.

Bevor eine durchgängige Schnittfuge entsteht, muss der Laserstrahl 6 das Werkstück 8 durchdringen. Das Blech 8 muss an einer Stelle punktförmig geschmolzen oder oxidiert werden und die Schmelze muss ausgeblasen werden. Der Einstechvorgang kann schnell (d.h. mit voller Laserleistung) oder langsam (über eine sog. "Rampe") erfolgen.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **9** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Beim Schneiden mit Sauerstoff wird in der Regel mit einem Gasdruck von maximal 6 bar gearbeitet. Dort, wo der Laserstrahl 6 auf das Blech 8 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **10** aus einer Absaugkammer **11** abgesaugt werden. Beim Oxidationsvorgang (exotherme Reaktion) wird zusätzlich Energie frei, die den Schneidprozess begünstig. In den Materialdicken, bei welchen für das Sauerstoffschneiden und das Stickstoff-Hochdruckschneiden die selbe Laserleistung verwendet werden kann, ist es bei einer Verwendung von Sauerstoff als Schneidgas möglich, mit deutlich höheren Schneidgeschwindigkeiten zu arbeiten oder höhere Materialdicken zu trennen, als es beim Einsatz von Stickstoff der Fall wäre.

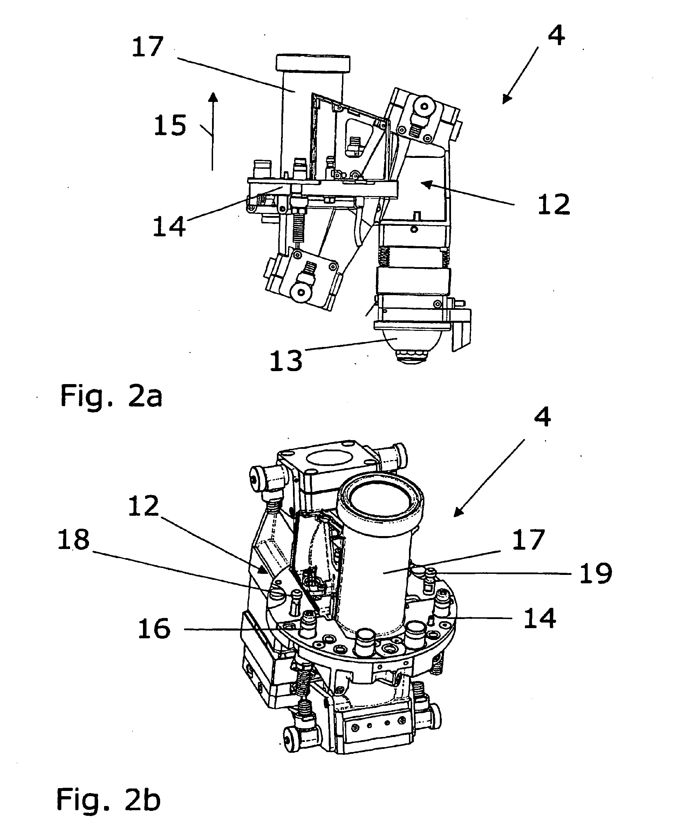

Gemäß **Fig. 2a** umfasst der Laserbearbeitungskopf 4 ein Gehäuse **12,** in dem eine Laseroptik zur Umlenkung und Fokussierung des Laserstrahls untergebracht ist, damit ein fokussierter Laserstrahl eine Laserbearbeitungsdüse **13** in Richtung des Werkstücks verlassen kann. Die Montage des Laserbearbeitungskopfs 4 erfolgt über einen Gehäuseabschnitt **14.** Die Montagerichtung des Gehäuseabschnitts 14 ist mit dem Bezugszeichen **15** bezeichnet und verläuft vertikal, um den Kopfwechsel mit einer Z-Achsenbewegung zu ermöglichen. In dieser Richtung 15 werden auch alle Signale, Hilfsenergieen und Medien wie Gasanschlüsse und Kühlwasseranschlüsse angekoppelt. Ein Kollisionsschutz ist in der Schnittstelle auch vorgesehen, der in Z-, X- und Y-Richtung gleichermaßen auslösen kann. Bei Kollision des Laserbearbeitungskopfs 4 an einem Hindernis wird die Bearbeitung gestoppt, und der Laserbearbeitungskopf 4 kann sich aus seinem Träger heraus lösen und durch entsprechende Hilfsmittel gehalten werden.

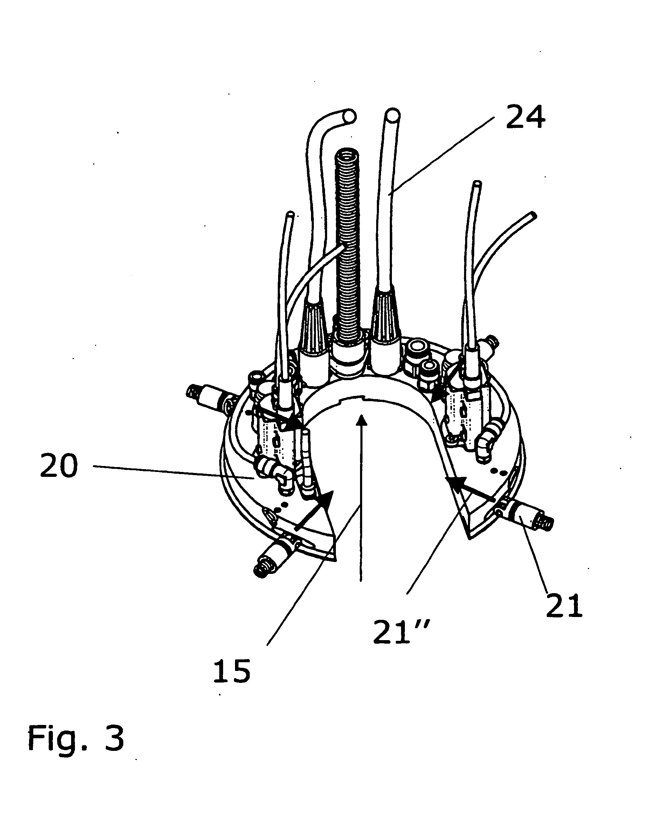

In **Fig. 2b** sind die Kupplungen für die Signalleitungen, die Energie zuführenden Kabel sowie die Gas- und Wasserleitungen besser zu erkennen. Beispielhaft ist eine Kupplung mit dem Bezugszeichen **16** bezeichnet. Der an einen Träger anzukuppelnde Gehäuseabschnitt 14 umschließt hufeisenförmig eine zylindrische Abschirmung **17** des Laserstrahls. Die ausgebildete Kollisionschutzeinrichtung umfasst Klemmkörper **18** und **19,** welche im fixierten Zustand des Laserbearbeitungskopfs 4 von Kollisionschutzelementen unter Ausbildung einer Klemmverbindung druckbeaufschlagt gehalten werden. Dabei kann der Gehäuseabschnitt 14 an den Träger **20** gemäß **Fig. 3** angekuppelt werden, an dem Kollisionsschutzelemente **21** angeordnet sind. Mithilfe des Gehäuseabschnitts 14 und des Trägers 20 wird einerseits die Verbindung an Leitungen oder Kabel **24** für Signale, Hilfsenergieen und Medien wie Gas und Kühlwasser hergestellt und andererseits der Kollisionsschutz ausgeführt. Die Schnittstelle hat die Funktion einer mechanischen Befestigung des Laserbearbeitungskopfs, der Übergabe von Arbeitsgasen, Kühlflüssigkeiten und umfasst einen Kollisionsschutz.

Die Kollisionschutzelemente 21 sind über den Träger 20 unter ca. 90° zueinander angeordnet und umfassen jeweils eine Rolle zur Anlage an einem Klemmkörper des Gehäuseteils des Laserbearbeitungskopfs unter einer einstellbaren Vorspannung. Die Druckbeaufschlagung oder Verspannung der Klemmkörper am Gehäuseabschnitt 14 ist durch die Pfeile **21"** gemäß den Kollisionsschutzelementen 21 angedeutet und wirkt quer zur Montagerichtung 15 des Bearbeitungskopfs.

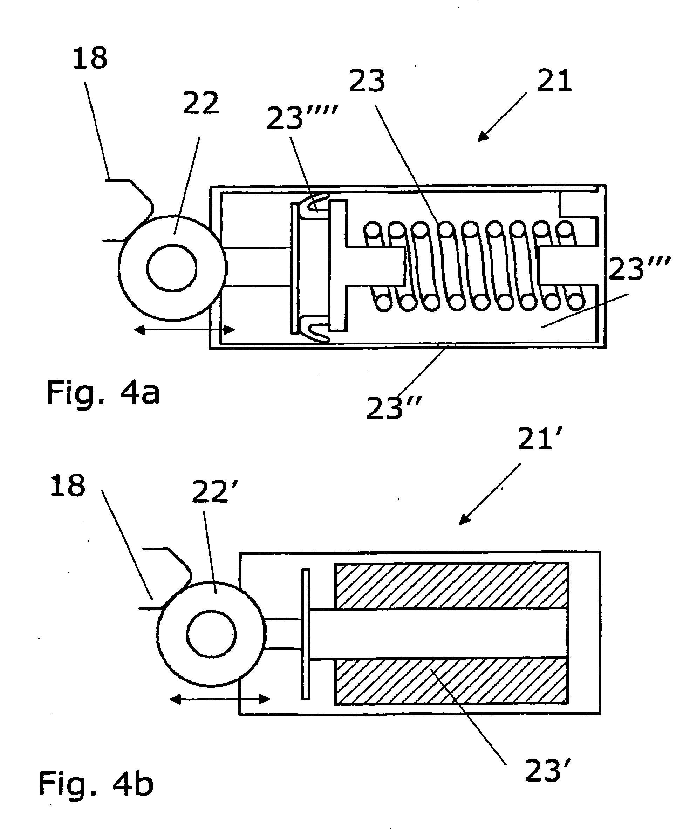

**Fig. 4a** zeigt eine erste Ausführung eines Kollsionsschutzelements 21 mit einer Rolle **22,** welche mithilfe einer mechanischen Druckfeder **23** und eines mithilfe einer Einlassöffnung **23"** zugeführten Gases unter Spannung an dem Klemmkörper 18 des Gehäuseabschnitts 14 anliegt. Ein Federraum **23"'** kann bis zu einer Dichtung **23""** aus Kunststoff mit einem Gas befüllt werden, um die mechanische Federkraft pneumatisch zu unterstützen. Die Rolle 22 ist mit einer Druckplatte verbunden, gegen die die Druckfeder 23 drückt. Wenn eine Kollision in X-, Y- oder Z-Richtung mit einer Kraft eintritt, welche größer als die Federkraft der Druckfeder 23 ist, wird die Druckfeder 23 gestaucht (siehe Pfeil), die Rolle 22 kann zurückgedrängt werden, und' eine schräge Anlagefläche an dem Klemmkörper 18 kann an der Rolle 22 abgleiten. Die Halterung des Bearbeitungskopfs am Träger wird gelöst.

**Fig. 4b** zeigt eine zweite Ausführung eines Kollsionsschutzelements **21'** mit einer Rolle **22',** welche mithilfe eines Magneten **23'** und eines von dem Magneten 23' gehaltenen, indirekt über eine Druckplatte auf die Rolle 22' wirkenden Bolzens unter Spannung an dem Klemmkörper 18 des Gehäuseabschnitts 14 anliegt. Die Rolle 22' ist mit der Druckplatte verbunden, gegen die der vom Magneten 23' gehaltene Bolzen drückt. Wenn eine Kollision in X-, Y- oder Z-Richtung mit einer Kraft eintritt, welche größer als magnetische Haltekraft ist, wird der Bolzen zurückgeschoben, die Rolle 22' kann zurückgedrängt werden (siehe Pfeil), und die schräge Anlagefläche an dem Klemmkörper 18 kann an der Rolle 22' abgleiten. Die Halterung des Bearbeitungskopfs am Träger wird gelöst.

Mithilfe der einstellbaren Magnetkraft oder der einstellbaren Federkraft kann die Härte oder Versteifung des Kollisionsschutzes gewählt werden. Je nach Bearbeitung des Werkstücks kann eine Haltekraft bzw. eine Auslösung des Kollisionsschutzes vorgegeben werden. Dies ermöglicht eine Halterung unterschiedlichster Bearbeitungsköpfe und einen automatischen Bearbeitungskopfwechsels (jeder Kopf hat auch einen Speicherchip mit seinen Daten). Es können in einer Bearbeitung mehrere Aufgaben auf dieser universellen Laserbearbeitungsanlage abgearbeitet werden. Die Kommunikation mit der Steuerung erfolgt über einen eigenen Bus. Folgende Bearbeitungsfunktionen sind denkbar: Laserschweißen, Laserschneiden, Vermessen mit einem Tastkopf oder optischem Messkopf, Gewindeschneiden mit Gewindeschneidspindel, Gravur (mit Fräser), Fräsen/ Entgraten/ Bürsten, Einbringen von Normteilen aus Magazin in lasergeschnittene Aussparungen, Bolzen anschweißen, einzelne Bauteile entnehmen bzw. sortieren, Beschriften, Etikettieren, Lackieren und nachher mit dem Laser einbrennen, Aufbringen eines Schutzfilms über der Beschriftung, von dem die Endlackierung wieder entfernt werden kann, Umformungen (mit geeigneten Hilfswerkzeugen), Werkstoffanalyse (Spektrometer), Oberflächeninspektion des Werkstücks.

### BEZUGSZEICHENLISTE

- 1: Laserbearbeitungsanlage
- 2: Laser
- 3: Steuereinrichtung
- 4: Laserbearbeitungskopf
- 5: Werkstückauflage
- 6: Laserstrahl
- 7:
- 8: Werkstück
- 9: Schneidgas
- 10: Absaugkammer
- 11: Absaugeinrichtung
- 12: Gehäuse
- 13: Laserbearbeitungsdüse
- 14: Gehäuseabschnitt
- 15: Montagerichtung
- 16: Kupplung
- 17: Abschirmung
- 18: Klemmkörper
- 19: Klemmkörper
- 20: Träger
- 21: Kollisionsschutzelement
- 22: Rolle
- 22': Rolle
- 23: Druckfeder
- 23': Magnet
- 23": Einlassöffnung
- 23‴: Federraum
- 23"": Dichtung

## Patentansprüche

1. Halterung eines Bearbeitungskopfs (4) an einer Laserbearbeitungsmaschine mit einer Kollisionsschutzeinrichtung zum Lösen der Halterung bei einer Kollision des Bearbeitungskopfs (4), **dadurch gekennzeichnet, dass** die Kollisionsschutzeinrichtung Kollisionsschutzelemente (21, 21') und Klemmkörper (18, 19) umfasst, die im fixierten Zustand des Bearbeitungskopfs (4) unter Ausbildung einer Klemmverbindung von den Kollisionsschutzelementen (21, 21') gehalten werden, wobei die Kollisionsschutzelemente (21, 21') mit einer Einstellung der auslösenden Kollisionskraft in Abhängigkeit von der Kraftausübung des Bearbeitungskopfs (4) auf ein zu bearbeitendes Werkstück vorgesehen sind.

2. Halterung nach Anspruch 1, **dadurch gekennzeichnet, dass** die Kollisionsschutzeinrichtung an einem Träger (20) zur Aufnahme des Bearbeitungskopfs (4) ausgebildet ist, welcher Kupplungen zum Anschluss von Signalleitungen, Energieleitungen, Kühlwasserleitungen oder dergleichen aufweist.

3. Halterung nach Anspruch 1 oder 2, **dadurch gekennzeichnet, dass** das Kollisionsschutzelement (21) eine durch eine Druckfeder (23) mit einstellbarer Federspannung druckbeaufschlagbare Rolle (22) oder Kugel umfasst.

4. Halterung nach Anspruch 1 oder 2, **dadurch gekennzeichnet, dass** das Kollisionsschutzelement (21') eine durch einen Magneten (23') mit einstellbarer Magnetkraft druckbeaufschlagbare Rolle (22') oder Kugel umfasst.

5. Halterung nach einem der vorhergehenden Ansprüche in Kombination mit einem Bearbeitungskopf (4), **dadurch gekennzeichnet, dass** der Bearbeitungskopf ein Laserbearbeitungskopf (4) oder ein Bearbeitungskopf (4) zum Bohren, Fräsen oder dergleichen ist.

## Claims

1. Holding arrangement for a processing head (4) on a laser processing machine having an anti-collision device for releasing the holding arrangement in the event of a collision of the processing head (4), **characterised in that** the anti-collision device comprises anti-collision elements (21, 21')and clamping bodies (18, 19) which, when the processing head (4) is in the fixed state, are held by the anti-collision elements (21, 21'), with the formation of a clamping connection, the anti-collision elements (21, 21') being provided with a triggering collision force setting in dependence on the force exerted by the processing head (4) on a workpiece to be processed.

2. Holding arrangement according to claim 1, **characterised in that** the anti-collision device is formed on a carrier (20) for receiving the processing head (4), which carrier (20) has couplings for connecting signal lines, energy lines, cooling water lines or the like.

3. Holding arrangement according to claim 1 or 2, **characterised in that** the anti-collision element (21) comprises a roll (22) or ball to which pressure can be applied by a compression spring (23) having adjustable spring tension.

4. Holding arrangement according to claim 1 or 2, **characterised in that** the anti-collision element (21') comprises a roll (22') or ball to which pressure can be applied by a magnet (23') having an adjustable magnetic force.

5. Holding arrangement according to any one of the preceding claims in combination with a processing head (4), **characterised in that** the processing head is a laser processing head (4) or a processing head (4) for drilling, milling or the like.

## Revendications

1. Dispositif de maintien d'une tête d'usinage (4) sur une machine d'usinage par laser, avec un dispositif anti-collision destiné à desserrer le dispositif de maintien en cas de collision de la tête d'usinage (4), **caractérisé en ce que** le dispositif anti-collision comprend des éléments anti-collision (21, 21') et des pièces de serrage (18, 19) et qui, dans l'état fixé de la tête d'usinage (4), sont maintenus en formant une liaison par serrage des éléments anti-collision (21, 21'), les éléments anti-collision (21, 21') étant prévus avec un réglage de la force de collision déclenchante en fonction de la force exercée par la tête d'usinage (4) sur la pièce à usiner.

2. Dispositif de maintien selon la revendication 1, **caractérisé en ce que** le dispositif anti-collision est réalisé sur un support (20) destiné à recevoir la tête d'usinage (4), lequel présente des accouplements pour le branchement de lignes de signalisation, de lignes d'énergie, de conduites d'eau de refroidissement ou analogues.

3. Dispositif de maintien selon la revendication 1 ou 2, **caractérisé en ce que** l'élément anti-collision (21) comprend un galet (22) ou une bille pouvant être soumis(e) à une pression par un ressort de compression (23) à tension de ressort réglable.

4. Dispositif de maintien selon la revendication 1 ou 2, **caractérisé en ce que** l'élément anti-collision (21') comprend un galet (22') ou une bille pouvant être soumis(e) à une pression par un aimant (23') à force magnétique réglable.

5. Dispositif de maintien selon l'une des revendications précédentes en combinaison avec une tête d'usinage (4), **caractérisé en ce que** la tête d'usinage est une tête d'usinage par laser (4) ou une tête d'usinage (4) destinée à percer, fraiser ou analogue.
